# EUROPEAN PATENT APPLICATION

(11) **EP 2 887 283 A1**
(43) Date of publication of application: **24.06.2015**
(21) Application number: 14195610.2
(22) Date of filing: 01.12.2014
(51) Int. Cl.: G06Q 10/06, G06Q 10/10

(54) **Server and method for managing task therewith**

(30) Priority: 18.12.2013 KR 20130157866
(71) Applicant: Samsung Electronics Co., Ltd, Gyeonggi-do 443-742 (KR)
(72) Inventor: Kim, Tae-jeoung, Gyeonggi-do (KR); Jung, Bo-sun, Gyeonggi-do (KR); Chung, Ki-chung, Gyeonggi-do (KR)
(74) Representative: Jenkins, Richard Gavin

(57) **Abstract**

A server, a user terminal, a task management system, and a task management method thereof are provided. The task management method includes collecting user data from at least one user terminal, generating task data by analyzing the collected user data, and transmitting at least one of the generated task data and a control command which is generated based on the task data to one of the at least one user terminal.

## Description

### CROSS-REFERENCE TO RELATED APPLICATION(S)

This application claims the benefit under 35 U.S.C. § 119(a) of a Korean patent application filed on December 18, 2013 in the Korean Intellectual Property Office and assigned Serial No. 10-2013-0157866, the entire disclosure of which is hereby incorporated by reference.

### TECHNICAL FIELD

The present disclosure relates to a server, a user terminal, a task management system, and a method for managing a task thereof. More particularly, the present disclosure relates to a server capable of managing a task of a user using user data of a user terminal, a user terminal, a task management system, and a method for managing a task thereof.

### BACKGROUND

Recently, various applications for managing personal tasks based on user data such as an email, a calendar function, a text message, etc. are provided. That is, users may manage their own tasks based on contents in an email, a text message, a calendar, a memo, etc. which are received or recorded in a user terminal.

However, according to the related art, a user needs to input or manage such a task in person. For example, in order to adjust a schedule, a user needs to input the schedule in person. Therefore, most users feel difficulties in utilizing the function of managing a task using user data. Moreover, such direct management by a user may even deteriorate productivity. Accordingly, there is a need for an improved apparatus and method for managing, predicting, summarizing, or arranging task data using user data.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a server capable of managing, predicting, summarizing, or arranging task data using user data, a user terminal, a task management system, and a method for managing a task thereof.

In accordance with an aspect of the present disclosure, a method for managing a task of a server is provided. The method includes collecting user data from at least one user terminal, generating task data by analyzing the collected user data, and transmitting at least one of the generated task data and a control command which is generated based on the task data to one of the at least one user terminal.

The user data may include at least one of task log data and life log data.

The generating may include generating task schedule data by using at least one of the task log data and the life log data.

The transmitting may include determining a task schedule change event by using at least one of task log data and life log data which is received from the at least one user terminal, and, when it is determined that the task schedule change event occurs, transmitting a task schedule change command to a user terminal which is related to the changed task schedule out of the at least one user terminal.

The generating may include generating at least one of message summary information and task list information by using at least one of the task log data and the life log data, and the transmitting may include transmitting each of the message summary information and the task list information to a corresponding user terminal.

The at least one user terminal may display the message summary information and the task list information on a standby screen.

The user data may include at least one of call record data and meeting record data, and the generating may include converting at least one of the call record data and the meeting record data to text data.

The method may further include storing the task data in the server, and, when a search request regarding a specific task is received from one of the at least one user terminal, responding to the search request by using the stored task data.

When a same user uses a plurality of user terminals, the transmitting includes transmitting all of the generated task data to a first user terminal from among the plurality of user terminals which are used by the same user, and transmitting summary information out of the task data to a second user terminal from among the plurality of user terminals which are used by the same user.

In accordance with another aspect of the present disclosure, a server which manages at least one user terminal is provided. The server includes a communication unit configured to perform communication with at least one user terminal, a storage configured to store task data, and a controller configured to control the communication unit to collect user data from the at least one user terminal through the communication unit, generate task data by analyzing the collected user data, and transmit at least one of the generated task data and a control command which is generated based on the task data to one of the at least one user terminal.

The user data may include at least one of task log data and life log data.

The controller may generate task schedule data by using at least one of the task log data and the life log data.

The controller may control the communication unit to determine a task schedule change event by using at least one of task log data and life log data which is received from the at least one user terminal, and, when it is determined that the task schedule change event occurs, to transmit a task schedule change command to a user terminal which is related to the changed task schedule out of the at least one user terminal.

The controller may control the communication unit to generate at least one of message summary information and task list information by using at least one of the task log data and the life log data, and to transmit each of the message summary information and the task list information to a corresponding user terminal.

The at least one user terminal may display the message summary information and the task list information on a standby screen.

The user data may include at least one of call record data and meeting record data, and the controller may convert at least one of the call record data and the meeting record data to text data.

The controller, when a search request regarding a specific task is received from one of the at least one user terminal through the communication unit, may respond to the search request by using the stored task data.

When a same user uses a plurality of user terminals, the controller may control the communication unit to transmit all of the generated task data to a first user terminal from among the plurality of user terminals which are used by the same user, and to transmit summary information out of the task data to a second user terminal from among the plurality of user terminals which are used by the same user.

In accordance with another aspect of the present disclosure, a method for managing a task of a user terminal is provided. The method includes obtaining user data, generating task data by analyzing the user data, and displaying message summary information and task list information included in the generated task data on a standby screen.

In accordance with another aspect of the present disclosure, a method for managing a task of a task management system is provided. The method includes transmitting user data to a server by a user terminal, generating task data by using the user data and generating a control command based on the task data by the server, transmitting at least one of the generated task data and a control command to the user terminal by the server, and storing the task data and performing a function according to the control command by the user terminal.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and/or other aspects, features, and advantages of certain embodiments of the present disclosure will be more apparent from the following description taken in conjunction with the accompanying drawings, in which:
FIG. 1 is a view illustrating a task management system according to an embodiment of the present disclosure;
FIG. 2 is a block diagram illustrating a configuration of a task management server according to an embodiment of the present disclosure;
FIG. 3 is a block diagram illustrating a configuration of a user terminal according to an embodiment of the present disclosure;
FIGS. 4A, 4B, and 4C are views provided to explain an embodiment regarding information on a task displayed on a standby screen of a user terminal according to an embodiment of the present disclosure;
FIGS. 5A and 5B are views illustrating a task management User Interface (UI) according to a type of user terminal according to an embodiment of the present disclosure;
FIG. 6 is a view illustrating a task evaluation UI of a user terminal according to an embodiment of the present disclosure;
FIGS. 7 and 8 are flowcharts provided to explain a task management method according to various embodiments of the present disclosure;
FIG. 9 is a sequence view provided to explain a task management method according to various embodiments of the present disclosure;
FIG. 10 is a view illustrating a task management system according to an embodiment of the present disclosure; and
FIG. 11 is a block diagram illustrating a configuration of a user terminal according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be observed the method operations and system components have been represented by conventional symbols in the figures, showing only details which are relevant for an understanding of the present disclosure. Further, details that are readily apparent to a person ordinarily skilled in the art may not have been disclosed. In the present disclosure, relational terms such as first and second, and the like, may be used to distinguish one entity from another entity, without necessarily implying any actual relationship or order between such entities.

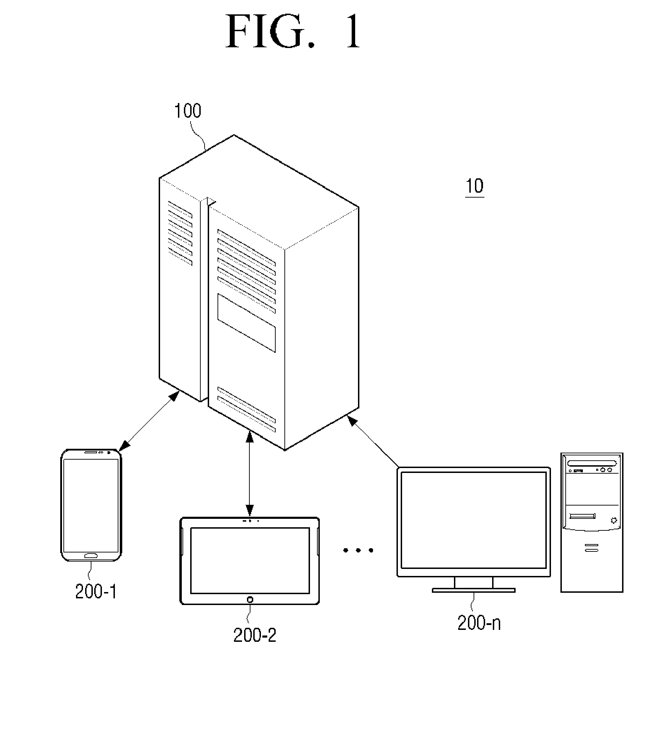

FIG. 1 is a view illustrating a task management system according to an embodiment of the present disclosure.

Referring to FIG. 1, a task management system 10 includes a task management server 100 and a plurality of user terminals 200-1, 200-2, ..., 200-n. In this case, each of the user terminals, designated generically as 200, may be realized as various types of user terminals such as a smart phone, a tablet Personal Computer (PC), a desktop PC, etc. as illustrated in FIG. 1.

First of all, each of the plurality of user terminals 200-1, 200-2, ..., 200-n obtains user data. In this case, the user data may be one of task log data, life log data, search data, call record data, meeting record data, and the like.

Each of the plurality of user terminals 200-1, 200-2, ..., 200-n transmits the obtained user data to the external management server 100.

The task management server 100 may generate task data based on user data collected from the plurality of user terminals 200-1, 200-2, ..., 200-n, and generate a control command based on the generated task data.

More specifically, the task management server 100 may generate task schedule data using at least one of task log data and life log data out of the received user data. For example, the task management server 100 may generate task schedule data using various user data such as email, text message, task diary, etc.

In addition, the task management server 100 may determine a task schedule change event using at least one of task log data and life log data which is received from one of the plurality of user terminals 200-1, 200-2, ..., 200-n. If it is determined that a task schedule change event occurs, the task management server 100 may transmit a task schedule change command to a user terminal which is related to the changed task schedule among at least one user terminal.

In addition, the task management server 100 may generate at least one of message summary information and task list information using at least one of task log data and life log data, and transmit the generated message summary information and task list information to corresponding user terminals, respectively. In this case, if the message summary information and the task list information are received, the user terminal 200 may display the message summary information and the task list information on a standby screen.

In addition, the user data may include at least one of call record data and meeting record data. When the call record data and the meeting record data are received, the task management server 100 may convert at least one of the call record data and the meeting record data to text data using Speech-To-Text (STT) algorithm.

In addition, the task management server 100 may store generated task data. In this case, if a search request for a specific task is received from one of a plurality of user terminals 200-1, 200-2, ..., 200-n, the task management server 100 may respond to the search request using stored task data.

If the same user uses a plurality of user terminals, the task management server 100 may transmit all of the generated task data to the second user terminal 200-2 from among the plurality of user terminals used by the same user, and may transmit summary information out of the task data to a third user terminal 200-3 from among the plurality of user terminals used by the same user. In this case, the second user terminal 200-2 may be a user terminal with a large display screen such as a desktop PC, a notebook PC, a tablet PC, etc., and the third user terminal 200-3 may be a user terminal with a small display screen such as smart phone.

In addition, the task management server 100 may generate task evaluation information based on user data. In this case, the task management server 100 may transmit the task evaluation information to a user terminal with an access right (for example, a user terminal of a user at a higher position) from among the plurality of user terminals.

As described above, the task management server 100 generates and transmits task data and a control command automatically based on user data and thus, a user may manage tasks more efficiently without any particular input.

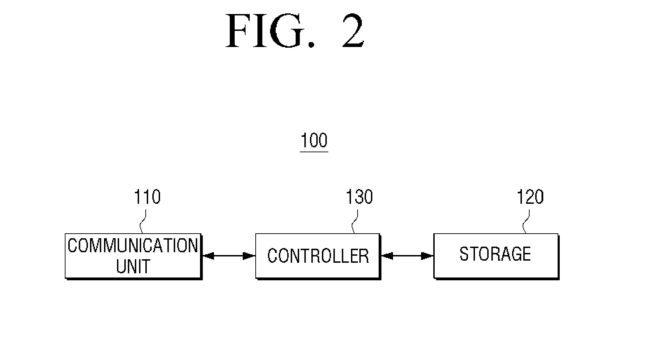

FIG. 2 is a block diagram illustrating configuration of a task management server according to an embodiment of the present disclosure.

Referring to FIG. 2, the task management server 100 includes a communication unit 110, a storage 120 and a controller 130.

The communication unit 110 performs communication with the external user terminal 200 according to various communication methods. For example, the communication unit 110 may perform communication with the external user terminal 200 using various communication methods such as WiFi communication, Bluetooth communication, wireless communication, etc.

In particular, the communication unit 110 may receive user data from a plurality of user terminals 200-1, 200-2, ..., 200-n. In addition, the communication unit 110 may transmit task data and a control command which is generated based on the task data to the plurality of user terminals 200-1, 200-2, ..., 200-n.

The storage 120 stores various modules to perform a task management function. In particular, the storage 120 may include a task schedule generating module to generate task schedule data, an STT converting module to convert voice data to text data, a summary module to summarize task data, a search module, and the like.

In addition, the storage 120 may store task data generated from user data.

The controller 130 controls overall operations of the task management server 100. In particular, the controller 130 may collect user data from at least one user terminal through the communication unit 110, generate task data by analyzing the collected user data, and control the communication unit 110 to transmit at least one of the generated task data and a control command generated based on the task data to at least one user terminal.

More specifically, the controller 130 may receive user data from the plurality of user terminals 200-1, 200-2, ..., 200-n. In this case, the user data may include at least one of task log data, life log data, search data, call record data, meeting record data, and the like. Herein, the task log data task may include a diary record, a payment record, memo information, etc., the life log data may include a text message, an e-mail, a phone call transceiving list, a news feed, etc., and the search data may include web page search information.

In particular, if the task log data and the life log data are received, the controller 130 may generate task schedule data using the received task log data and life log data. More specifically, the controller 130 may generate task schedule data based on various user data such as a text message, an e-mail, a task diary, a task memo, etc. For example, if "see you tomorrow at 2 p.m." is included in a text message received from user A, the controller 130 may generate a meeting schedule with user A as task schedule data by parsing the text message. If "I will visit you on November 8, 2013 at 2 p.m. to discuss the contract matter" is included in an e-mail received from user B, the controller 130 may generate a meeting schedule with user B as task schedule data by parsing the e-mail.

In addition, the controller 130 may determine a task schedule change event by using at least one of task log data and life log data received from at least one user terminal. For example, if an e-mail including the text, "urgent meeting tomorrow at 2 p.m.", is received from user C, and a schedule already exists in the same time period, the controller 130 may determine a task schedule change event.

If it is determined that a task schedule change event occurs, the controller 130 may analyze task schedule data of another user which is related to the existing task schedule. The controller 130 may change a task schedule so that users related to the existing task schedule can meet together. In addition, the controller 130 may control the communication unit 110 to transmit a task schedule change command to a user terminal which is related to the existing task schedule. For example, if the time when all users related to the existing task schedule can meet is November 12, 2013, at 11 a.m., the controller 130 may control the communication unit 110 to transmit a task schedule change message including the changed time information to user terminals of users who are related to the existing task schedule.

In addition, the controller 130 generates at least one of message summary information and task list information using at least one of task log data and life log data, and may control the communication unit 110 to transmit each of the message summary information and the task list information to a corresponding user terminal. Herein, the message summary information refers to summary information of a message which is related to a task, and the task list information refers to a list of tasks which should be performed within a predetermined period (for example, today). In this case, the user terminal may display the received message summary information and task list information on a standby screen.

In addition, if at least one of call record data and meeting record data is received from the user terminal 200, the controller 130 may convert at least one of the call record data and the meeting record data to text using an SST algorithm. In this case, the controller 130 may generate a record data by converting at least one of call record data and meeting record data into text. In this case, the controller 130 may generate record summary data by analyzing the meaning of the record data. Accordingly, a user may search the recording of a phone call or a meeting later.

If a search request regarding a specific task is received from at least one user terminal through the communication unit 110, the controller 130 may respond to the search request by using stored task data. For example, the storage 120 may store task data regarding "project A". If a search request including a key word related to "project A" is received from the first user terminal 200-1, the controller 130 may transmit information regarding "project A" to the first user terminal 200-1. In this case, the information regarding "project A" may include not only contents regarding "project A" but also information on figures related to "project A".

If the same user uses a plurality of user terminals, the controller 130 may control the communication unit 110 to transmit different task data to the plurality of user terminals which are used by the same user. More specifically, the controller 130 may control the communication unit 110 to transmit all of the generated task data to the first user terminal from among the plurality of user terminals which are used by the same user, and to transmit summary information out of the task data to the second user terminal from among the plurality of user terminals which are used by the same user. For example, the controller may control the communication unit 100 to transmit all of the task data to a desktop PC or a notebook PC with a big display screen, and to transmit only summary information out of the task data to a smart phone or a Personal Digital Assistant phone with a small display screen.

In addition, the controller 130 may generate task evaluation data using task data. In this case, the task evaluation data may include a task performance period, task progress information, coworker evaluation information, award-winning information, etc. In this case, the controller 130 may transmit task evaluation data only to a user with an access right from among a plurality of user terminals. For example, the controller 130 may transmit task evaluation data only to a user at a position with personnel decisions.

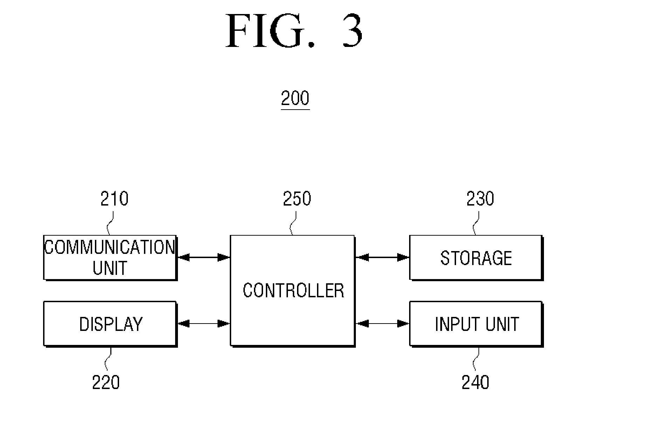

FIG. 3 is a block diagram illustrating a configuration of a user terminal according to an embodiment of the present disclosure.

Referring to FIG. 3, the user terminal 200 includes a communication unit 210, a display 220, a storage 230, an input unit 240, and a controller 250.

The communication unit 210 performs communication with various types of external apparatuses according to various types of communication methods. The communication unit 210 may include various communication chips such as a WiFi chip, a Bluetooth chip, a Near Field Communication (NFC) chip, a wireless communication chip, and so on. In this case, the WiFi chip, the Bluetooth chip, and the NFC chip perform communication according to a WiFi method, a Bluetooth method, and an NFC method, respectively. Among the above chips, the NFC chip represents a chip which operates according to an NFC method which uses a 13.56MHz band among various RF-ID frequency bands such as 135kHz, 13.56MHz, 433MHz, 860∼960MHz, 2.45GHz, and so on. In the case of the WiFi chip or the Bluetooth chip, various connection information such as SSID and a session key may be transmitted/received first for communication connection and then various information may be transmitted/received. The wireless communication chip represents a chip which performs communication according to various communication standards such as IEEE, Zigbee, 3^{rd} Generation (3G), 3^{rd} Generation Partnership Project (3GPP), Long Term Evolution (LTE), and so on.

In particular, the communication unit 210 may transmit user data to the external task management server 100. In addition, the communication unit 210 may receive at least one of task data and a control command which is generated based on the task data from the task management server 100.

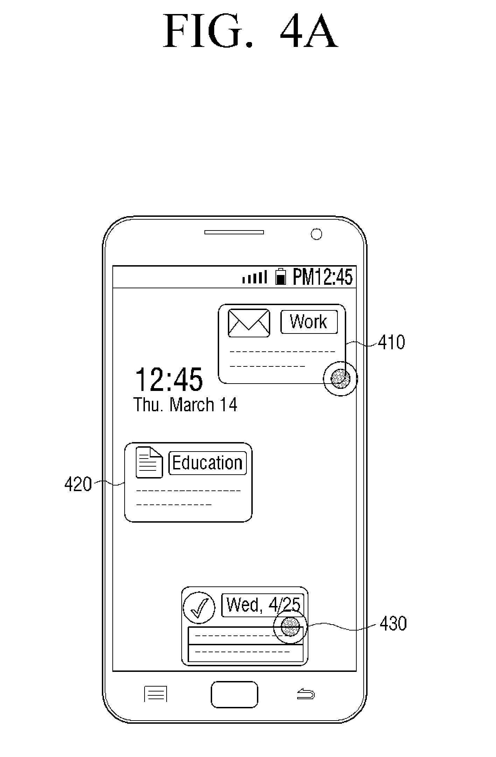

The display 220 may output various image data under the control of the controller 250. In particular, the display 220 may display various User Interfaces (UIs) to display task data, such as those illustrated in FIGS. 4A to 6, described below.

The storage 210 stores various modules to drive the user terminal 200. For example, the storage 210 may store various software including a base module, a sensing module, a communication module, a presentation module, a web browser module, a service module, and the like. In this case, the base module refers to a basic module which processes a signal transmitted from each hardware included in the portable terminal 100, and transmits the processed signal to an upper layer module. The sensing module is a module which collects information from various sensors, and analyzes and manages the collected information. The sensing module may include a face recognition module, a voice recognition module, a motion recognition module, an NFC recognition module, and so on. The presentation module is a module to compose a display screen. The presentation module includes a multimedia module for reproducing and outputting multimedia contents, and a UI rendering module for UI and graphic processing. The communication module is a module to perform external communication. The web browser module refers to a module which accesses a web server by performing web-browsing. The service module is a module including various applications for providing various services.

In addition, the storage 230 may store user data and task data received from the task management server 100.

The input unit 240 may receive various user commands to control the user terminal 200. In this case, the input unit 240 may be realized as a touch screen, but this is only an example. The input unit 240 may be realized as various input apparatuses such as keyboard, mouse, pointing device, button, remote controller, etc.

The controller 250 may control overall operations of the user terminal according to a user command input through the input unit 240.

More specifically, the controller 250 obtains user data according to various methods, and controls the communication unit 210 to transmit the obtained user data to the task management server 100. If task data corresponding to user data is received from the task management server 100, the controller 250 may store or display the task data.

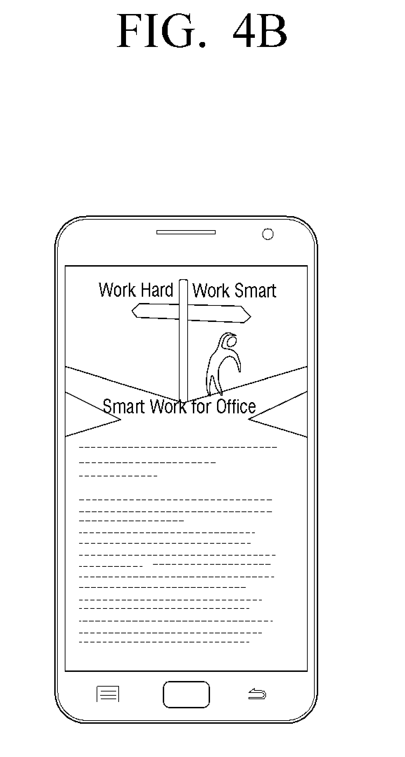

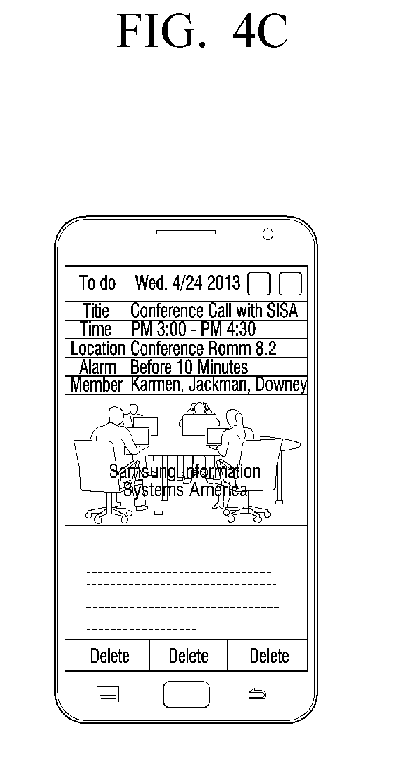

FIGS. 4A, 4B, and 4C are views provided to explain an embodiment regarding information on a task displayed on a standby screen of a user terminal according to an embodiment of the present disclosure.

Referring to FIGS. 4A to 4C, if message summary information and task list information is received, the controller 250 may control the display 220 to display the received message summary information and task list information on a standby screen. More specifically, as illustrated in FIG. 4A, the controller 250 may control the display 220 to display UIs 410, 420 including summary information of a task message and a UI 430 including task list information. If the first UI 410 including summary information of a task message is selected through the input unit 240, the controller 250 may control the display 220 to display a task message corresponding to the first UI 410 as illustrated in FIG. 4B. In addition, if the third UI 430 including task list information is selected through the input unit 240, the controller 250 may control the display 220 to display a task message corresponding to the third UI 430 as illustrated in FIG. 4C.

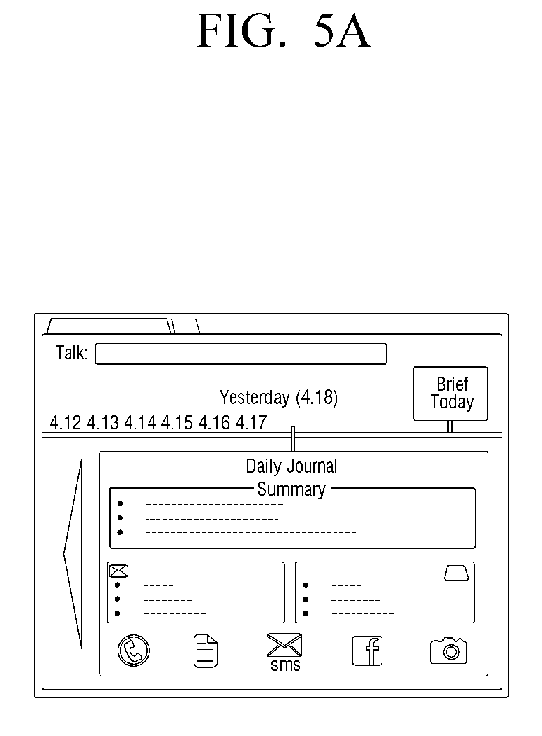

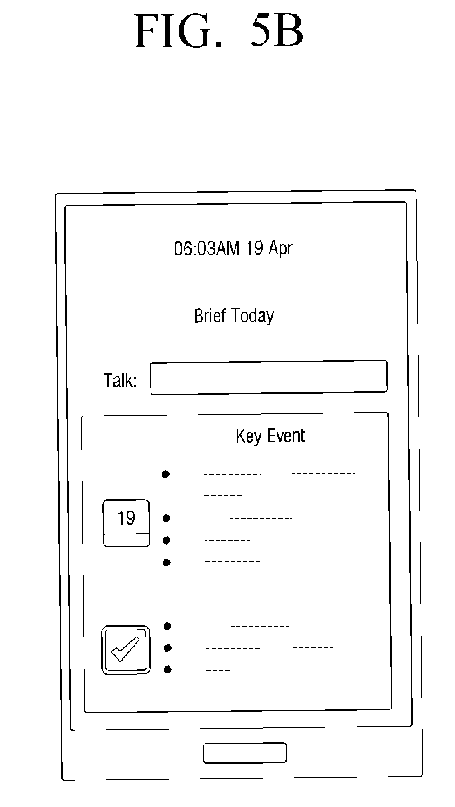

FIGS. 5A and 5B are views illustrating a task management UI according to a type of user terminal according to an embodiment of the present disclosure.

Referring to FIGS. 5A and 5B, the controller 250 may control the display 220 to display a different task management UI according to the type of user terminal. More specifically, if the size of the display 220 is larger than a predetermined size (for example, a desktop PC), the controller 250 may control the display 220 to display a task management UI including overall contents of task data as illustrated in FIG. 5A. If the size of the display 220 is less than a predetermined size (for example, a smart phone), the controller 250 may control the display 220 to display a task management UI including only summary information of task data as illustrated in FIG. 5B.

In addition, the controller 250 may generate task evaluation information by receiving task evaluation information from the task management server 100 or analyzing collected user data. In this case, the task evaluation information includes evaluation information regarding various items such as education, creation, sharing, visitation, etc. which are generated based on email transceiving information, a history of taken online courses, results of online education evaluation, documents prepared by cooperation, a history of sharing valid information, a history of task-related searching, and the like. In this case, the task evaluation information may provide a quantitative value according to a level of each item and a badge in a pre-defined shape according to each value.

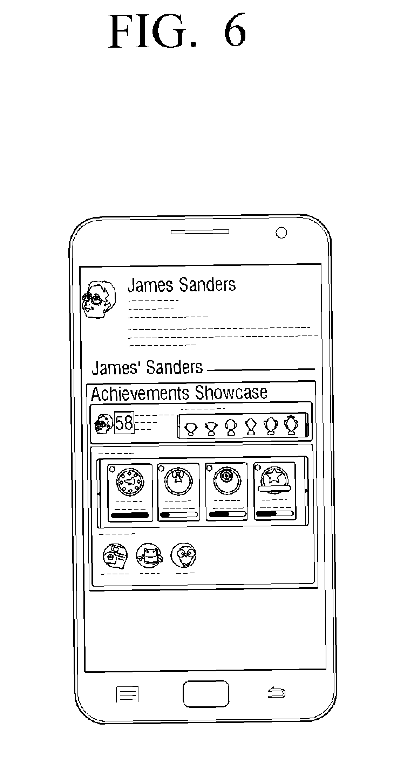

FIG. 6 is a view illustrating a task evaluation UI of a user terminal according to an embodiment of the present disclosure.

Referring to FIG. 6, the controller 250 may display a task evaluation UI including task evaluation information. In this case, the task evaluation UI may include award-winning information, task progress information, coworker evaluation information, a task performance period, etc.

By using the above-described task evaluation UI, a user may check an evaluation on his or her task performance in real time and thus, productivity may be maximized by strengthening motivation and promoting competition with other coworkers. In addition, the user may review which field should be developed further by checking his or her strong points and weaknesses, an evaluator may also refer to the UI as reference when performing a multi-faceted evaluation.

If a control command is received from the task management server 100, the controller 250 may perform a function corresponding to the control command. For example, if a task schedule change command is input from the task management server 100, the controller 250 may adjust a task schedule according to the task schedule change command and store the changed task schedule. If a notification command regarding a specific task is input from another task management server 100, the controller 250 may control the display 220 to display a notification message regarding the specific task.

Through the above-described task management server 100 and the user terminal 200, a user may manage his or her tasks efficiently without any particular input.

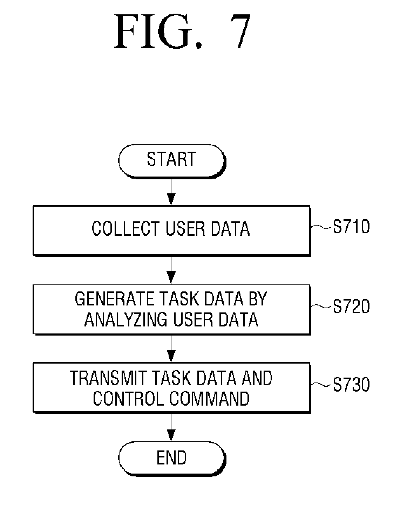

FIG. 7 is a flowchart provided to explain a task management method of a task management server according to an embodiment of the present disclosure.

Referring to FIG. 7, the task management server 100 collects user data from a plurality of user terminals 200-1, 200-2, ..., 200-n in operation S710. In this case, the user data may include at least one of task log data, life log data, search data, call record data, meeting record data, and the like.

In addition, the task management server 100 generates task data by analyzing user data in operation S720. More specifically, the task management server 100 may generate task schedule data, message summary data, and task list data by analyzing task log data and life log data. Further, the task management server 100 may generate record data and record summary data by using call record data and meeting record data.

The task management server 100 transmits task data and a control command which is generated based on the task data to the user terminal 200 in operation S730. More specifically, the task management server 100 may transmit the generated task schedule data, message summary data, and task list data, and transmit a task command such as a task schedule change command, a task notification command, etc.

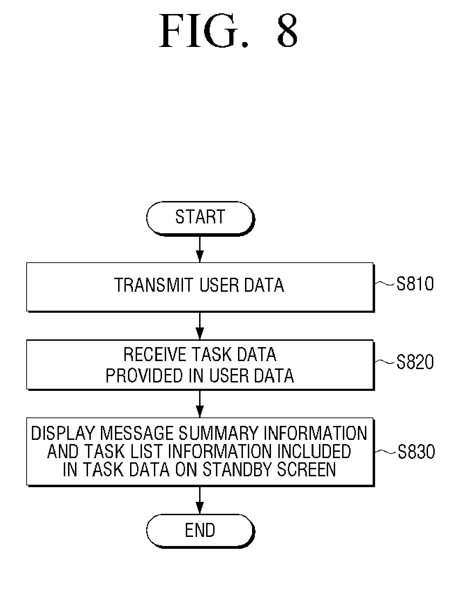

FIG. 8 is a flowchart provided to explain a task management method of a user terminal according to an embodiment of the present disclosure.

Referring to FIG. 8, the user terminal 200 transmits collected user data to the task management server 100 in operation S810. In this case, the user data may include at least one of task log data, life log data, search data, call record data, meeting record data, and the like.

Subsequently, the user terminal 200 receives task data corresponding to the user data in operation S820. In this case, the task data may include at least one of message summary data and task list data.

The user terminal 200 displays message summary information and task list information included in the task data on a standby screen in operation S830. More specifically, the user terminal 200 may display a UI including message summary information and a UI including task list information on the standby screen as illustrated in FIG. 4A. If the UI including message summary information or the UI including task list information is selected, the user terminal 200 may display message information or task list information.

As described above, by displaying task data on the standby screen, a user may check his or her task more quickly.

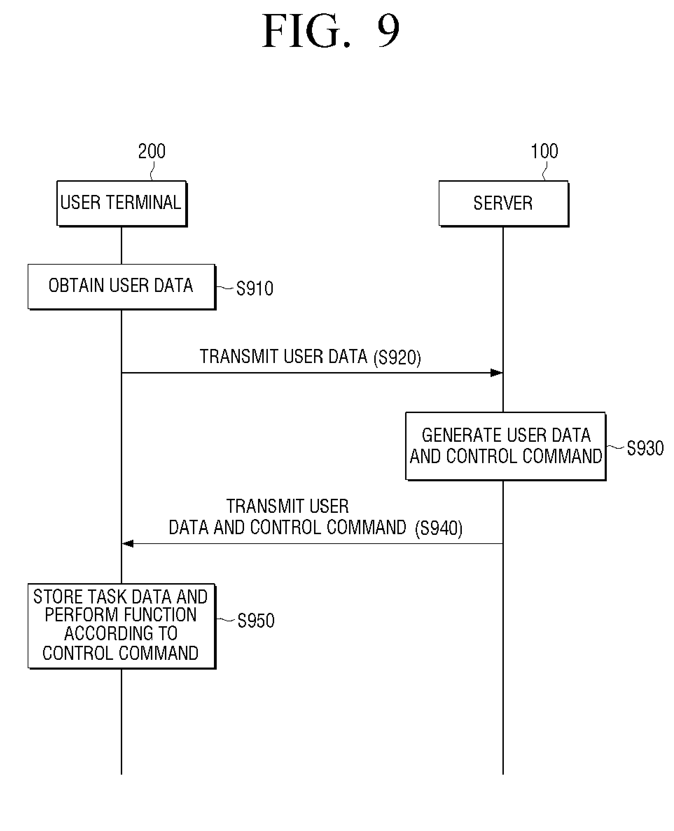

FIG. 9 is a sequence view provided to explain a task management method according to various embodiments of the present disclosure.

Referring to FIG. 9, the user terminal 200 obtains user data in operation S910. In this case, the user terminal 200 may obtain a text message, an e-mail, a news feed, call record data, meeting record data, a task diary, a task memo, etc.

Subsequently, the user terminal 200 transmits the obtained user data to the task management server 100 in operation S920.

The task management server 100 generates task data and a control command by analyzing the user data in operation S930. In this case, the task management server 100 may generate task data such as task schedule information, message summary information, task list information, etc., and a control command such as a task schedule change command, a task notification command, etc.

The task management server 100 transmits the task data and the control command to the user terminal 200 in operation S940.

The user terminal 200 stores the task data, and performs a function according to the control command in operation S950. More specifically, the user terminal 200 may store or display task schedule information, message summary information, task list information, etc., and may change a task schedule or display a task notification message according to a task schedule change command or a task notification command, respectively.

As described above, by using the task management system 10, a user may manage a task more easily and conveniently without any particular manipulation.

In the above embodiment, the server 100 collects user data from at least one user terminal and generates task data, but this is only an example. The user terminal 200 may generate task data by directly analyzing user data.

More specifically, the user terminal 200 may generate task schedule data using at least one of task log data and life log data.

In addition, the user terminal 200 may determine a task schedule change event by using at least one of task log data and life log data. If it is determined that a task schedule change event occurs, the user terminal 200 may transmit a task schedule change command to a user terminal which is related to the changed task schedule from among other user terminals.

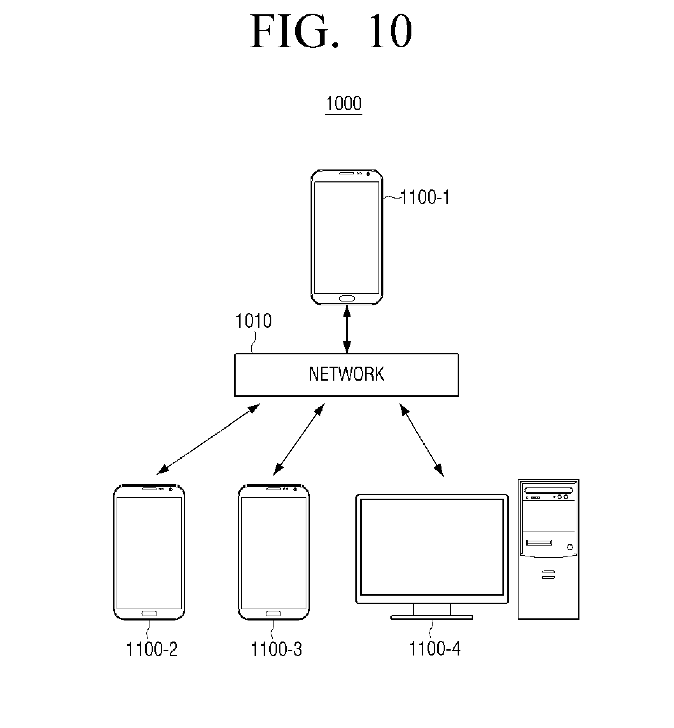

Meanwhile, in the above embodiment, the server 100 collects user data from at least one user terminal and generates task data, but this is only an example. One of a plurality of user terminals may collect user data without the server 100, generate at least one of task data and a control command based on the user data, and transmit it to another user terminal, which will be described with reference to FIG. 10.

FIG. 10 is a view illustrating a task management system according to an embodiment of the present disclosure.

Referring to FIG. 10, a task management system 1000 includes a plurality of user terminals 1100-1, 1100-2, 1100-3, and 1100-4. In this case, the plurality of user terminals 1100-1, 1100-2, 1100-3, and 1100-4 may be connected to each other through a network 1010. In this case, the network 1010 may be realized as various networks such as a Bluetooth network, a WiFi network, etc.

The first user terminal 1100-1 obtains user data. In this case, the user data may be one of task log data, life log data, search data, call record data, meeting record data, and the like.

In particular, the first user terminal 1100-1 may obtain not only user data input to the first user terminal 1100-1 but also user data input to other user terminals 1100-2, 1100-3, and 1100-4.

The first user terminal 1100-1 may generate task data based on the collected user data, and may generate a control command based on the generated task data.

More specifically, the first user terminal 1100-1 may generate task schedule data by using at least one of task log data and life log data out of the received user data. For example, the first user terminal 1100-1 may generate task schedule data by using various user data such as an e-mail, a text message, a task diary, etc.

In addition, the first user terminal 1100-1 may determine a task schedule change event by using at least one of the obtained task log data and life log data. If it is determined that a task schedule change event occurs, the first user terminal 1100-1 may transmit a task schedule change command to a user terminal which is related to the changed task schedule from among other user terminals 1100-2, 1100-3, and 1100-4.

Further, the first user terminal 1100-1 may generate at least one of message summary information and task list information by using at least one of task log data and life log data, and may display each of the generated message summary information and task list information on a standby screen.

If call record data and meeting record data is obtained, the first user terminal 1100-1 may convert at least one of the call record data and the meeting record data into text data by using an STT algorithm and store the converted data.

In addition, the first user terminal 1100-1 may store the generated task data. In this case, if a search request regarding a specific task is received from one of the other user terminals 1100-2, 1100-3, and 1100-4, the first user terminal 1100-1 may respond to the search request by using the stored task data.

If the first user terminal 1100-1 and the second user terminal 1100-2 are used by the same user, the first user terminal 1100-1 may transmit all of the generated task data to the second user terminal 1100-2, or may transmit summary information out of the task data. More specifically, if the second user terminal 1100-2 is a user terminal with a large display screen, such as a desktop PC, a notebook PC, a tablet PC, etc., the first user terminal 1100-1 may transmit all of the task data, and if the second user terminal 1100-2 is a user terminal with a small display screen, such as a smart phone, the first user terminal 1100-1 may transmit summary information out of the task data.

In addition, the first user terminal 1100-1 may generate task evaluation information based on user data. In this case, the first user terminal 1100-1 may transmit task evaluation information to an external server or a user terminal with an access right (for example, a user terminal of a user at a higher position) from among other user terminals.

As described above, the user terminal 1100 may directly generate and manage task data and a control command based on user data.

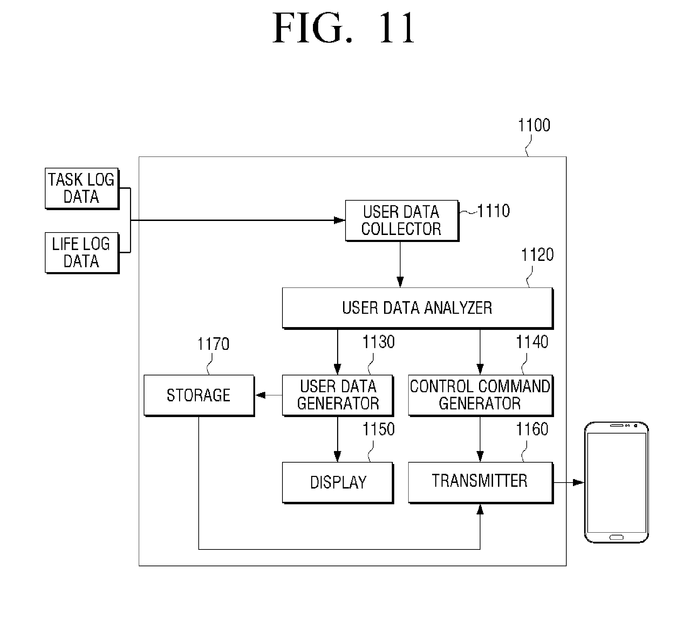

FIG. 11 is a block diagram illustrating a configuration of a user terminal according to an embodiment of the present disclosure.

Referring to FIG. 11, the user terminal 1100 includes a user data collector 1110, a user data analyzer 1120, a task data generator 11130, a control command generator 1140, a display 1150, a transmitter 1160, and a storage 1170.

The user data collector 1110 collects various user data such as task log data and life log data. In this case, the user data collector 1110 may collect different types of user data such as call record data, meeting record data, a search history, and the like.

The user data analyzer 1120 analyzes the collected user data. In this case, the user data analyzer 1120 may classify user data related to a task by parsing the collected user data and analyzing the classified user data. For example, if the collected user data is a text message, the user data analyzer 1120 may determine whether there is a word related to a task by parsing the text message. If it is determined that there is a word related to a task, the user data analyzer 1120 may analyze a task schedule generating event or a task schedule change event by analyzing the text message.

The task data generator 1130 generates task data based on the result of the analysis. For example, the task data generator 1130 may generate task schedule data and task schedule change data based on the result of the analysis.

The control command generator 1140 may transmit a control command to control another user terminal based on the analysis result of the user data. For example, if a schedule change event occurs, the control command generator 1140 may generate a task schedule change command to be transmitted to another user terminal.

The display 1150 displays generated task data. In this case, the display 1150 may display all of the generated task data, but this is only an example. In an embodiment, the display 1150 may also display only summary information out of the task data.

The transmitter 1160 transmits a generated control command to another user terminal.

The storage 1170 stores generated task data. In particular, if a search request is received from another user terminal, the storage 1170 may transmit data corresponding to the search request to another user terminal.

A program code to perform a task management method according to various embodiments may be stored in a non-transitory computer readable medium. The non-transitory recordable medium refers to a medium which may store data semi-permanently rather than storing data for a short time such as a register, a cache, and a memory and may be readable by an apparatus. More specifically, the above-described various applications or programs may be stored in a non-temporal recordable medium such as CD, DVD, hard disk, Blu-ray disk, USB, memory card, ROM, etc. and provided therein

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for managing a task of a server, the method comprising:
collecting user data from at least one user terminal;
generating task data by analyzing the collected user data; and
transmitting at least one of the generated task data and a control command which is generated based on the task data to one of the at least one user terminal.

2. The method as claimed in claim 1, wherein the user data includes at least one of task log data and life log data.

3. The method as claimed in claim 2, wherein the generating comprises generating task schedule data by using at least one of the task log data and the life log data.

4. The method as claimed in claim 3, wherein the transmitting comprises:
determining a task schedule change event by using at least one of the task log data and the life log data which is received from the at least one user terminal; and
when it is determined that the task schedule change event occurs, transmitting a task schedule change command to a user terminal which is related to the changed task schedule out of the at least one user terminal.

5. The method as claimed in claim 2, wherein the generating comprises generating at least one of message summary information and task list information by using at least one of the task log data and the life log data,
wherein the transmitting comprises transmitting each of the message summary information and the task list information to a corresponding user terminal.

6. The method as claimed in claim 5, wherein the at least one user terminal displays the message summary information and the task list information on a standby screen.

7. The method as claimed in any one of claim 1 to claim 6, wherein the user data includes at least one of call record data and meeting record data,
wherein the generating comprises converting at least one of the call record data and the meeting record data to text data.

8. The method as claimed in any one of claim 1 to claim 7, further comprising:
storing the task data in the server; and
when a search request regarding a specific task is received from one of the at least one user terminal, responding to the search request by using the stored task data.

9. The method as claimed in any one of claim 1 to claim 8, wherein when a same user uses a plurality of user terminals, the transmitting comprises transmitting all of the generated task data to a first user terminal from among the plurality of user terminals which are used by the same user, and transmitting summary information out of the task data to a second user terminal from among the plurality of user terminals which are used by the same user.

10. A server which manages at least one user terminal, the server comprising:
a communication unit configured to perform communication with at least one user terminal;
a storage configured to store task data; and
a controller configured to control the communication unit to collect user data from the at least one user terminal through the communication unit, generate task data by analyzing the collected user data, and transmit at least one of the generated task data and a control command which is generated based on the task data to one of the at least one user terminal.

11. The server as claimed in claim 10, wherein the user data includes at least one of task log data and life log data.

12. The server as claimed in claim 11, wherein the controller generates task schedule data by using at least one of the task log data and the life log data.

13. The server as claimed in claim 12, wherein the controller controls the communication unit to determine a task schedule change event by using at least one of the task log data and the life log data which is received from the at least one user terminal, and, when it is determined that the task schedule change event occurs, to transmit a task schedule change command to a user terminal which is related to the changed task schedule out of the at least one user terminal.

14. The server as claimed in claim 11, wherein the controller controls the communication unit to generate at least one of message summary information and task list information by using at least one of the task log data and the life log data, and to transmit each of the message summary information and the task list information to a corresponding user terminal.

15. The server as claimed in any one of claim 10 to claim 14, wherein the at least one user terminal displays the message summary information and the task list information on a standby screen.
